# EUROPEAN PATENT APPLICATION

(11) **EP 1 676 880 A1**
(43) Date of publication of application: **05.07.2006**
(21) Application number: 04773782.0
(22) Date of filing: 12.10.2004
(51) Int. Cl.: C08L 9/00, B60C 1/00, B60C 15/06, B60C 17/00, C08J 9/32

(54) **RUBBER COMPOSITION FOR TIRE AND PNEUMATIC TIRE MADE THEREFROM**

(30) Priority: 15.10.2003 JP 2003355290
(71) Applicant: THE YOKOHAMA RUBBER CO., LTD., Tokyo 105-8685 (JP); MATSUMOTO YUSHI-SEIYAKU CO., LTD., Yao-shi, Osaka 581-0075 (JP)
(72) Inventor: MORI, Makio, THE YOKOHAMA RUBBER CO., LTD., Hiratsuka-shi, Kanagawa 2548601 (JP); FUKUTOMI, Takayuki, THE YOKOHAMA RUBBER CO., LTD., Hiratsuka-shi, Kanagawa 2548601 (JP); SHIROKAWA, Takashi, THE YOKOHAMA RUBBER CO., LTD., Hiratsuka-shi, Kanagawa 2548601 (JP); SUGIYAMA, Tomoaki, THE YOKOHAMA RUBBER CO., LTD., Hiratsuka-shi, Kanagawa 2548601 (JP); TAKEDA, Shinya, THE YOKOHAMA RUBBER CO., LTD., Hiratsuka-shi, Kanagawa 2548601 (JP); MASUDA, Toshiaki, MATSUMOTO YUSHI-SEIYAKU CO., LTD, Yao-shi, Osaka 5810075 (JP); SHIRAKABE, Yoshiaki MATSUMOTO YUSHI-SEIYAKU CO,LTD, Yao-shi, Osaka 5810075 (JP)
(74) Representative: HOFFMANN EITLE
(86) International application number: PCT/JP2004/015331
(87) International publication number: WO 2005/035646

(57) **Abstract**

A rubber composition containing 100 parts by weight of a diene-based rubber and 0.5 to 25 parts by weight of a heat expandable microcapsule composed of a thermoplastic resin particle having a substance enclosed therein, capable of vaporizing or expanding due to heat to thereby generate a gas, wherein a shell of the heat expandable microcapsule comprises a thermoplastic resin obtained by polymerization from, as a main component of a monomer, a nitrile-based monomer (I), a monomer (II) having an unsaturated double bond and carboxyl group in the molecule thereof, a monomer (III) having two or more polymerizable double bonds and, optionally, a copolymerizable monomer (IV) for adjusting the expansion characteristics, and a pneumatic tire using the same, whereby the tire weight is decreased and the ice traction thereof is improved.

## Description

### TECHNICAL FIELD

The present invention relates to a rubber composition, more specifically relates to a rubber composition containing a diene-based rubber having a heat expandable microcapsule compounded therein suitable for use as a pneumatic tire having a superior ice frictional force, particularly as a tread and bead filler of a pneumatic tire and a reinforcing liner of a run flat tire.

### BACKGROUND ART

It is already known in the art that a thermoplastic resin particle containing a substance capable of vaporizing or expanding due to heat (hereinafter referred to as "heat expandable microcapsule") is blended into a diene-based rubber to obtain a rubber composition having a superior ice friction performance (see, e.g., Japanese Patent Publication No. 1998-316801 A and Japanese Patent Publication No. 1999-035736 A). Such a heat expandable microcapsule is already available on the market.

Conventional heat expandable microcapsules are mainly composed of, as main components, an acryl-based copolymer having a nitrile-based monomer and a (meth)acrylic ester-based monomer as a shell, but these microcapsules are difficult to control the expansion start temperature region at the high temperature side. No model exists enabling a high expansion pressure at an expansion start temperature of 160°C or more. When blending the microcapsules into rubber, the rubber formulation is made to low viscosity for obtaining the required sufficient expansion.

On the other hand, as one type of safety tire, a side-reinforced run flat tire, which is capable of running for a certain distance in an emergency, even when the pneumatic tire is punctured etc. during operation of an automobile, etc. and rapidly falls in internal pressure, is known. This is designed to a structure where the insides of the sidewalls are reinforced with a rubber known as a "reinforcing liner" so as to enable the vehicle weight to be supported even in the zero pressure state. This reinforcing liner requires the characteristics of both high hardness and low heat buildup, but an increase in weight is unavoidable and an increase in the tire rolling resistance and deterioration of riding comfort are incurred. As a means for solving these problems, the use of an expandable substance has been proposed. However, no technology has yet been commercialized which enables expansion, while maintaining the desired hardness and viscoelasticity characteristics (see Japanese Patent Publication No. 2002-127719 A).

When a heat expandable microcapsule formulation is used, there was the problem that prior heat expandable microcapsules having an acryl-based copolymer composed of, as the main component, a nitrile-based monomer and a (meth)acrylic ester-based monomer as a shell cannot generate sufficient expansion pressure in a rubber formulation having a hardness suitable for a reinforcing liner and, to obtain sufficient expansion, viscosity of the rubber formulation had to be decreased.

### DISCLOSURE OF THE INVENTION

Accordingly, the object of the present invention is to eliminate the above-mentioned problems in the prior art and to provide a rubber composition providing a high expansion rate at a high temperature of 160°C to 185°C and having superior ice performance such as ice frictional force.

Another object of the present invention is to provide a rubber composition capable of achieving both a high hardness and low heat buildup even at a high temperature region of 160°C to 185°C and useful as rubber for a tire tread, tire bead filler or run flat tire reinforcing liner.

In accordance with the present invention, there is provided a rubber composition for a tire tread, a tire bead filler, or a reinforcing liner of a run flat tire comprising 100 parts by weight of a diene-based rubber and 0.5 to 25 parts by weight of a heat expandable microcapsule composed of a thermoplastic resin particle having a substance enclosed therein, capable of vaporizing or expanding due to heat to thereby generate a gas, wherein a shell of the heat expandable microcapsule comprises a thermoplastic resin obtained by polymerization from, as a main component of a monomer, a nitrile-based monomer (I), a monomer (II) having an unsaturated double bond and carboxyl group in the molecule thereof, a monomer (III) having two or more polymerizable double bonds and, optionally, a copolymerizable monomer (IV) for adjusting expansion characteristics.

In accordance with the present invention, there is also provided a pneumatic tire using the above rubber composition for a pneumatic tire, in particular a tire tread, a bead filler, or a reinforcing liner of a run flat tire.

The heat expandable microcapsule according to the present invention has a high expansion pressure compared with a conventional heat expandable microcapsule at a high temperature region of 160 to 185°C and, even when blended into a rubber, provides a rubber composition having an expansion rate equal to that of a composition using a conventional microcapsule even at a lower concentration. Further, according to the present invention, a good expansion even in a state with a high viscosity of the rubber formulation, the improvement of the ice frictional force, and applicability of the adjustment of the product performance other than the ice performance becomes possible, and, according to the present invention, without impairing the run flat performance, the tire weight can be decreased, the riding comfort can be maintained, and the rolling resistance can be reduced.

### BEST MODE FOR CARRING OUT THE INVENTION

The singular forms ("a", "an", and "the") used in the present description and the claims should be understood as including the plural form, unless otherwise clear from the context.

The heat expandable microcapsule blended into the rubber composition of the present invention has a shell composed of a thermoplastic resin obtained by polymerization from a nitrile-based monomer (I), as the main component, and a monomer (II) having an unsaturated double bond and a carboxyl group in the molecule, a monomer (III) having two or more polymerizable double bonds, and, optionally, a copolymerizable monomer (IV) for adjusting the expansion characteristics.

As explained above, the heat expandable microcapsule usable in the present invention has a shell mainly composed of a thermoplastic resin obtained by polymerization from a monomer of a nitrile-based monomer (I) and a monomer (II) having an unsaturated double bond and a carboxyl group in the molecule thereof, a monomer (III) having two or more polymerizable double bonds, and, optionally, a copolymerizable monomer (IV) for adjusting the expansion characteristics. The thermoplastic resin can be preferably obtained by polymerization, in an ordinary method, from 40 to 95% by weight (more preferably 50 to 90% by weight) of the main component of the nitrile-based monomer (I), 7 to 60% by weight (more preferably 10 to 50% by weight) of the monomer (II) having an unsaturated double bond and a carboxyl group in the molecule thereof, 0.05 to 5% by weight (more preferably 0.2 to 3% by weight) of the monomer (III) having two or more polymerizable double bonds, and, optionally, 0 to 20% by weight (more preferably 0 to 15% by weight) of the copolymerizable monomer (IV) for adjusting the expansion characteristics.

The heat expandable microcapsule has, in the state not blended into rubber, a volume retention rate of the expanded expansion body after applying 15 MPa pressure to the heat expanded expansion body of preferably 50% or more, more preferably 70 to 100%. Further, to obtain the heat expandable microcapsule by polymerization of these components at the time of polymerization, it is preferable to use a polymerization initiator composed of an oil-soluble peroxide or azobis-based compound having a half-life of 1 to 25 hours at the reaction temperature.

As the nitrile-based monomer (I) usable in the present invention, acrylonitrile, methacrylonitrile, α-chloroacrylonitrile, α-epoxyacrylonitrile, fumaronitrile, or any mixture thereof, etc. may be mentioned, but acrylonitrile and/or methacrylonitrile is particularly preferable. The use amount of the nitrile-based monomer is preferably 40 to 95% by weight of the thermoplastic resin, more preferably 50 to 90% by weight. If less than 40% by weight, the object of the present invention is difficult to achieve.

Examples of the monomer (II) having an unsaturated double bond and a carboxyl group in the molecule thereof are described below, but the present invention is not limited thereto. That is, for example, acrylic acid (AA), methacrylic acid (MAA), itaconic acid, styrene sulfonic acid or sodium salt thereof, maleic acid, fumaric acid, citraconic acid, and mixtures thereof are included. The amount used of the monomer (II) having an unsaturated double bond and a carboxyl group in the molecule thereof is preferably 7 to 60% by weight of the thermoplastic resin, more preferably 10 to 50% by weight. If more than 60% by weight, the object of the present invention is difficult to achieve. If less than 7% by weight, the foamability at a high temperature region is liable to decrease.

Examples of the monomer (III) having two or more polymerizable double bonds are described below, but the present invention is not limited thereto. That is, for example, aromatic divinyl compounds such as divinylbenzene, divinylnaphthalene, acryl methacrylate, triacryl formal, triallyl isocyanate, ethyleneglycol di(meth)acrylate, diethyleneglycol di(meth)acrylate, triethyleneglycol di(meth)acrylate, 1,4-butanediol di(meth)acrylate, 1,9-nonanediol di(meth)acrylate, 1,10-decanediol di(meth)acrylate, PEG#200 di(meth)acrylate, PEG #400 di(meth)acrylate, PEG #600di(meth)acrylate, neopentylglycol di(meth)acrylate, 1,4-butanediol di(meth)acrylate, 1,6-hexanediol di(meth)acrylate, 1,9-nonanediol di(meth)acrylate, trimethylolpropane tri(meth)acrylate, EO-modified trimethylolpropane tri(meth)acrylate, glycerin di(meth)acrylate, dimethylol-tricyclodecane di(meth)acrylate, pentaerythritol tri(meth)acrylate, pentaerythritol tetra(meth)acrylate, dipentaerythritol hexa(meth)acrylate, neopentylglycol acrylate benzoate ester, trimethylolpropane acrylate benzoate ester, 2-hydroxy-3-acryloyloxypropyl (meth)acrylate, hydroxypivarate neopentylglycol di(meth)acrylate, ditrimethyloylpropane tetra(meth)acrylate, 2-butyl-2-ethyl-1,3-propanediol di(meth)acrylate, polytetramethyleneglycol di(meth)acrylate, phenylglycidylether acrylate hexamethylene diisocyanate urethane prepolymer, phenylglycidylether acrylate toluene diisocyanate urethane prepolymer, pentaerythritol triacrylate hexamethylene diisocyanate urethane prepolymer, pentaerythritol triacrylate toluene diisocyanate urethane prepolymer, pentaerythritol triacrylate isophoron diisocyanate urethane prepolymer, etc. and any mixture of the same are included. The amount used of the monomer (III) having two or more polymerizable double bonds is preferably 0.05 to 5% by weight, more preferably 0.2 to 3% by weight, based upon the thermoplastic resin. If the amount is less than 0.05% by weight or more than 5% by weight, the foaming performance at a high temperature region becomes poor and the object of the present invention is liable to become difficult to achieve.

Examples of the optional monomer (IV) for adjusting the softening point in the present invention are described below, but the present invention is not limited thereto. That is, for example, styrene-based monomers such as vinylidene chloride, vinyl acetate, methyl (meth)acrylate, ethyl (meth)acrylate, n-butyl (meth)acrylate, isobutyl (meth)acrylate, t-butyl (meth)acrylate, isobornyl (meth)acrylate, cyclohexyl (meth)acrylate, benzyl (meth)acrylate, β-carboxyethyl acrylate, and other (meth)acrylic acid esters, styrene, styrene sulfonic acid or their sodium salts, α-methylstyrene, chlorostyrene, monomers such as acrylamide, substituted acrylamide, methacrylamide, substituted methacrylamide, in which a polymerization reaction proceeds with general radical initiators and any mixtures thereof are included. The use amount of the monomer (IV) is preferably 0 to 20% by weight of the thermoplastic resin, more preferably 0 to 15% by weight. If more than 20% by weight, the object of the present invention is liable to become difficult to achieve.

Examples of the polymerization initiators usable for polymerization of the monomer mixture are described below, but the invention is not limited thereto. Preferably, the peroxide compounds, i.e., dialkyl peroxide, diacyl peroxide, peroxy acid esters, peroxydicarbonate, and azo compounds having half-life, at the reaction temperature, of preferably 1 to 25 hours, more preferably 5 to 20 hours, are used for suspension polymerization of the monomer mixture.

The heat expandable microcapsules usable in the present invention are generally produced using the production method of conventional heat expandable microcapsules. That is, as a dispersion stabilizer in an aqueous system, inorganic particles such as silica, magnesium hydroxide, are used. In addition, as a dispersion stabilization aid, a condensation product of diethanolamine and an aliphatic dicarboxylic acid, polyvinylpyrrolidone, methyl cellulol, polyethylene oxide, polyvinyl alcohol, various emulsifiers, etc. may be used.

The diene-based rubber usable in the present invention may be any diene-based rubber conventionally used for tires, for example, natural rubber (NR), polyisoprene rubber (IR), various types of styrenebutadiene copolymer rubber (SBR), various types of polybutadiene rubber (BR), acrylonitrile-butadiene copolymer rubber, etc. These may be used alone or in any mixtures thereof. The rubber composition of the present invention contains the heat expandable capsule in an amount of 0.5 to 25 parts by weight, preferably 6 to 12 parts by weight, based upon respect to 100 parts by weight of the diene-based rubber. If the blended amount is too small, sufficient expansion of the rubber cannot be obtained, and therefore, the desired decrease in the specific gravity and decrease in the heat buildup cannot be obtained, and therefore, this is not preferred. Conversely, if too large, the strength of the rubber is decreased, and therefore, this is not preferred either.

The tire rubber composition of the present invention may further contain, for example, carbon black, silica, or another reinforcing filler, an ordinary vulcanization or cross-linking agent, vulcanization or cross-linking accelerator, various types of oil, an antioxidant, a filler, a plasticizer (or softening agent) and other various types of additives generally used for general rubber use. The blended amount of these additives may also be made the conventional general amounts so long as to the object of the present invention is not adversely affected.

The rubber composition according to the present invention, as explained above, has a high hardness (for example, in terms of the JIS A hardness, of 75 or more, preferably 78 to 85) and has a low heat buildup, and therefore, in addition to the tread of a pneumatic tire, is useful for the reinforcing liner or bead filler of a run flat tire. The rubber composition according to the present invention has superior expansion characteristics, and therefore the specific gravity of the rubber composition after vulcanization can be reduced 10% or more, preferably 12 to 15%, from the calculated average specific gravity value (i.e., theoretical value) obtained by calculating and adding up the specific gravities of the different compounding agents (components making up unvulcanized rubber composition) based upon their amounts. Therefore, in particular, the weight of a bead filler of a pneumatic tire or a reinforcing layer of a run flat tire can be decreased in weight. This is extremely useful.

### EXAMPLES

Examples will now be used to further explain the present invention, but the scope of the present invention is by no means limited to these Examples.

### Examples 1 to 2 and Comparative Examples 1 to 2

In each of the formulations shown in Table I, the components other than the vulcanization accelerator, sulfur, and heat expandable microcapsule were mixed in a 1.8 liter internal mixer for 3 to 5 minutes and discharged, when reaching 165±5°C, to obtain a master batch. This master batch was mixed with the vulcanization accelerator, sulfur and heat expandable microcapsules by an 8-inch open roll to obtain a rubber composition. The rubber composition (unvulcanized) thus obtained was press vulcanized in a 15 x 15 x 0.2 cm mold at 160°C for 20 minutes to prepare a intended test piece (i.e., rubber sheet) which was then evaluated for the expansion rate and ice traction of the vulcanized rubber. The results are shown in Table I.

**Table I**

| | Comp. Ex. 1 | Comp. Ex. 2 | Ex. 1 | Ex. 2 |
|---|---|---|---|---|
| Formulation (parts by weight) | | | | |
| NR^{*1} | 20 | 20 | 20 | 20 |
| BR^{*2} | 80 | 80 | 80 | 80 |
| CB^{*3} | 35 | 50 | 50 | 50 |
| ZnO^{*4} | 6 | 3 | 3 | 3 |
| S^{t}A^{*5} | 2 | 2 | 2 | 2 |
| 6C^{*6} | 2 | 2 | 2 | 2 |
| Oil^{*7} | 20 | 20 | 20 | 20 |
| Sulfur^{*8} | 1.5 | 2 | 2 | 2 |
| CBS^{*9} | 1.5 | 2 | 2 | 2 |
| Microspheres F100^{*10} | - | 6 | - | - |
| Improved type microcapsules ^{*11} | - | - | 4 | 6 |

| Evaluated physical properties | | | | |
|---|---|---|---|---|
| Vulcanized rubber (expansion rate) | 0% | 9% | 10% | 15% |
| Ice frictional force (-1.5°C) (index) | 100 | 112 | 115 | 126 |

| | | | | |
|---|---|---|---|---|
| Notes to Table I *1: Natural rubber (NR) (RSS#3) | | | | |
| *2: Nipol 1220 available from Nippon Zeon | | | | |
| *3: Shoblack N330 available from Showa Cabot | | | | |
| *4: Zinc Oxide #3 available from Seido Chemical | | | | |
| *5: Beads Stearic Acid available from NOF Corporation | | | | |
| *6: Santoflex 6PPD available from Flexsys | | | | |
| *7: Aromatic oil #4 available from Showa Shell Oil | | | | |
| *8: Sulfur powder available from Tsurumi Chemical | | | | |
| *9: Noccelar CZ available from Ouchi Shinko Chemical Industrial | | | | |
| *10: Microsphere F100D available from Matsumoto Yushi-Seiyaku | | | | |
| *11: Produced in the following way: | | | | |

As an aqueous system, 45 g of 40% solid content colloidal silica, 1 g of diethanolamine-adipic acid condensate, 150 g of sodium chloride and 500 g of ion exchanged water were added and mixed, then adjusted to a pH of 3.5 to produce a water-based dispersion medium. As the oil system, 70 g of acrylonitrile, 70 g of methacrylonitrile, 70 g of methacrylic acid, 3 g of ethyleneglycol dimethacrylate and 1 g of azobis (2,4-dimethylvaleronitrile) were mixed to obtain a uniform solution of a monomer mixture. This was charged into an autoclave, along with 20 g of isopentane and 30 g of 2-methylpentane, and mixed. Thereafter, the water-based dispersion medium was charged into the autoclave. The content was stirred for 5 minutes at 700 rpm, then the atmosphere was substituted with nitrogen and the reaction was caused at a reaction temperature of 60°C for 8 hours. The reaction pressure was 0.5 MPa and the stirring 350 rpm. The heat expandable microcapsules prepared by this reaction were analyzed for their heat expansion characteristics. In practice, a Perkin-Elmer TMA-7 Model was used for analysis of the expansion characteristics by the method described in Japanese Patent Publication No. 11-002616 A, whereupon it was found that the foaming start temperature was 160°C and the maximum expansion temperature was 200°C.

### Methods of Evaluation of Physical Properties

Vulcanized rubber (expansion rate): The specific gravity of vulcanized rubber measured based on JIS K2249 was divided by the calculated specific gravity (theoretical value) found from the specific gravities and proportions of the compounding agents, and the difference from 1.0 was used as expansion rate.

Ice frictional force (-1.5°C): A sheet obtained by vulcanization of each compound was attached to a rubber base having a flattened columnar shape. An inside drum type ice frictional force tester was used for measurement at a measurement temperature of -1.5°C, a load of 0.54 MPa, and a drum speed of 25 km/h. The results are shown indexed to the value of Comparative Example 1 as 100. The larger the value, the more excellent the ice performance.

### Example 3 and Comparative Examples 3 to 5

For each of the formulations shown in Table II, the same procedure was followed as in the above Examples to obtain a rubber composition. The vulcanized physical properties thereof (i.e., hardness and specific gravity) were measured by the following methods. The results are shown in Table II.
Hardness: Measured based on JIS K6253
Specific gravity: Measured based on JIS K2249

**Table II**

| | Comp. Ex. 3 | Comp. Ex. 4 | Comp. Ex. 5 | Ex. 3 |
|---|---|---|---|---|
| Formulation (parts by weight) | | | | |
| NR^{*1} 50 | | 50 | 50 | 50 |
| BR^{*2} | 50 | 50 | 50 | 50 |
| Carbon black ^{*3} | 70 | 70 | 70 | 70 |
| ZnO^{*4} | 5 | 5 | 5 | 5 |
| Stearic acid^{*5} | 1 | 1 | 1 | 1 |
| Antioxidant 6PPD^{*6} | 1 | 1 | 1 | 1 |
| Oil ^{*7} | 5 | 5 | 5 | 5 |
| Sulfur^{*8} | 4 | 4 | 4 | 4 |
| Vulcanization accelerator^{*9} | 2 | 2 | 2 | 2 |
| Chemical foaming agent DPT^{*10} | - | - | 7 | - |
| Microspheres F100^{*11} | - | 10 | - | - |
| Improved type microcapsules^{*12} | - | - | - | 10 |

| Evaluated physical properties | | | | |
|---|---|---|---|---|
| Hardness (JISA) | 80 | 80 | 62 | 81 |
| Specific gravity | 1.18 | 1.17 | 1.02 | 1.03 |

| | | | | |
|---|---|---|---|---|
| Notes to Table II *1: Natural rubber RSS#3 | | | | |
| *2: Nipol 1220 available from Nippon Zeon | | | | |
| *3: Shoblack N330 available from Showa Cabot | | | | |
| *4: Zinc Oxide #3 available from Seido Chemical | | | | |
| *5: Beads Stearic Acid available from NOF Corporation | | | | |
| *6: Santoflex 6PPD available from Flexsys | | | | |
| *7: Aromatic Oil #4 available from Showa Shell Oil | | | | |
| *8: Sulfur powder available from Tsurumi Chemical | | | | |
| *9: Noccelar CZ available from Ouchi Shinko Chemical Industrial | | | | |
| *10: Cellular D available from Eiwa Chemical | | | | |
| *11: Microsphere F100 available from Matsumoto Yushi-Seiyaku | | | | |
| *12: Same as Example 1 | | | | |

### INDUSTRIAL APPLICABILITY

As explained above, according to the present invention, by blending the heat expandable microcapsules higher in expansion pressure at a high temperature region of 160 to 185°C than in the past, a rubber composition having superior ice friction force is obtained. This is useful for a tire tread, tire bead filler of a pneumatic tire or a reinforcing liner of a run flat tire.

## Claims

1. A rubber composition for a tire tread, a tire bead filler, or a reinforcing liner of a run flat tire comprising 100 parts by weight of a diene-based rubber and 0.5 to 25 parts by weight of a heat expandable microcapsule composed of a thermoplastic resin particle having a substance enclosed therein, capable of vaporizing or expanding due to heat to thereby generate a gas, wherein a shell of the heat expandable microcapsule comprises a thermoplastic resin obtained by polymerization from, as a main component of a monomer, a nitrile-based monomer (I), a monomer (II) having an unsaturated double bond and carboxyl group in the molecule thereof, a monomer (III) having two or more polymerizable double bonds and, optionally, a copolymerizable monomer (IV) for adjusting expansion characteristics.

2. A rubber composition as claimed in claim 1, wherein the heat expandable microcapsules have a volume retention rate of the expanded body after applying 15 MPa pressure to the heat expanded body above of 50% or more.

3. A rubber composition as claimed in claim 1 or 2, wherein the shell of the heat expandable microcapsule is obtained by polymerization using, as a polymerization initiator, an oil-soluble peroxide or azobis-based compound having a half-life of 1 to 25 hours at the reaction temperature.

4. A rubber composition as claimed in claim 1, 2 or 3, wherein the shell of the heat expandable microcapsules is a thermoplastic resin obtained by polymerization of 40 to 95% by weight of the nitrile-based monomer, 7 to 60% by weight of the monomer (II) having an unsaturated double bond and carboxyl group in the molecule thereof, 0.05 to 5% by weight of the monomer (III) having two or more polymerizable double bonds, and, optionally, 0 to 20% by weight of the copolymerizable monomer (IV) for adjusting the expansion characteristics.

5. A pneumatic tire using, as a tire tread, the rubber composition according to any one of claims 1 to 4.

6. A rubber composition as claimed in any one of claims 1 to 4, wherein the specific gravity of the rubber composition after vulcanization is lower, by 10% or more, than a theoretical value of the specific gravities of the components thereof and the hardness according to JIS A is 75 or more.

7. A pneumatic tire using the rubber composition according to claim 6 for a bead filler, or a reinforcing liner or bead filler of a run flat tire.
